# EUROPÄISCHE PATENTSCHRIFT

(11) **EP 1 538 784 B1**
(45) Veröffentlichungstag und Bekanntmachung des Hinweises auf die Patenterteilung: **18.10.2006**
(21) Anmeldenummer: 04028504.1
(22) Anmeldetag: 02.12.2004
(51) Int. Cl.: H04L 12/40

(54) **Umsetzer für Installations-Bussysteme**
Converter for installation bus systems
Convertisseur pour des systèmes de bus d'installation

(30) Priorität: 04.12.2003 DE 20318766 U
(43) Veröffentlichungstag der Anmeldung: 08.06.2005
(73) Patentinhaber: Merten GmbH & Co. KG, 51674 Wiehl (DE)
(72) Erfinder: Herrmann, Bernd-Peter, Dipl.-Ing., 51645 Gummersbach (DE); Klingberg, Axel, Dipl.-Ing., 51647 Gummersbach (DE)
(74) Vertreter: Selting, Günther

(56) Entgegenhaltungen:
- EP-A- 0 566 935
- DE-A- 3 733 467
- DE-A- 4 210 023
- US-A- 5 684 449

## Beschreibung

Die Erfindung betrifft einen Umsetzer für Installations-Bussysteme zur Ermöglichung einer Kommunikation zwischen einem Zweidraht- und einem Vierdraht-Bussystem, welche im gleichen Busprotokoll betrieben sind, wobei jedes Bussystem Busankoppler aufweist, die jeweils eine Telegrammeinheit zur Erzeugung von Bustelegrammen aus externen Signalen, oder umgekehrt, und eine Busanschlusseinheit mit Sendestufe und Empfangsstufe für Bustelegramme enthalten.

Im Bereich der Gebäudesystemtechnik gibt es zwei verschiedene Grundtypen von Bussystemen, über welche digitale Datentelegramme übertragen werden können. Bei einem Zweidraht-Bus wird über dieselben Leitungen sowohl die Information als auch der Versorgungsstrom für die Busankoppler übertragen. In den Busankopplern werden Versorgungsstrom und Information voneinander getrennt bzw. zusammengeführt. Ein eingeführtes System in dieser Technik ist der European Installation Bus (EIB). Der Vorteil eines Zweidraht-Bussystems ist die einfache Verbindungsleitung.

Bei einem Vierdraht-Bussystem werden die Informationen und der Versorgungsstrom über getrennte Aderpaare geführt. Der Aufwand für die Trennung von Versorgungsstrom und Information entfällt, wodurch die Busankoppler einfach und kostengünstig sind.

Installations-Bussysteme werden in einem Gebäude unabhängig von der Netzstromversorgung fest installiert. Sie werden benutzt, um Daten, Informationen, Befehle u.dgl. zu übertragen. An den Anschlussstellen befinden sich Busankoppler, an die externe Geräte angeschlossen werden. Die externen Geräte sind häufig Sensoren, Aktoren, z.B. Stellglieder, oder manuelle Eingabevorrichtungen, wie Schalter oder Dimmer. In einem Gebäude kommt es vor, dass für bestimmte Strecken Zweidrahtleitungen zur Verfügung stehen und für andere Strecken Vierdrahtleitungen. Wenn diese installierten Leitungen zu einem Datenbus zusammengeschaltet werden, müsste normalerweise ein einheitliches Zweidraht-Bussystem gebildet werden. Dieses erfordert einen höheren Aufwand bei den Busankopplern und nutzt die vorhandenen Vierdrahtleitungen nicht aus.

Ein weiteres Merkmal von Installations-Bussystemen besteht darin, dass die Busankoppler standardisiert sind. Die Busankoppler enthalten eine Telegrammeinheit zur Erzeugung bzw. Auswertung von Bustelegrammen und eine Busanschlusseinheit mit Sendestufe und Empfangsstufe für die Bustelegramme. Die Telegrammeinheit bildet den Informationsteil und die Busanschlusseinheit bildet den physischen Busanschluss zum Verbinden des Informationsteils mit dem Datenbus.

In EP-A-0566935 ist ein Schnittstellenbaustein zum Verbinden zweier Bussegmente beschrieben. Der Schnittstellenbausteil dient für einen Wechsel von bidirektionalem Betrieb einer Zweidraht-Busleitung zu unidirektionalem Betrieb zweier Zweidraht-Busleitungen, also einem unidirektionalen Vierdraht-Betrieb. Im unidirektionalen Betrieb sind erheblich größere Entfernungen als im bidirektionalen Betrieb übertragbar. Der Schnittstellenbausteil enthält jeweils einen Bustreiber mit einem Sender und einem Empfänger. Er bewirkt eine Verstärkung der ankommenden Signale zum Zwecke der Weiterleitung. In dem Schnittstellenbausteil ist der Empfänger der einen Zweidrahtleitung mit dem Sender der anderen Zweidrahtleitung gekoppelt und umgekehrt. Auf diese Weise erfolgt ein bidirektionaler Betrieb mit Streckenverstärkung. Die Stromversorgung erfolgt ebenfalls über das Bussystem.

Der Erfindung liegt die Aufgabe zugrunde, einen Umsetzer für Installations-Bussysteme zu schaffen, mit dem auf einfache Weise ein Vierdraht-Bussystem und ein Zweidraht-Bussystem, welche im gleichen Busprotokoll betrieben werden, miteinander kombiniert werden können.

Der erfindungsgemäße Umsetzer ist durch den Anspruch 1 bezeichnet. Er besteht aus einem Gerät, welches - vorzugsweise im selben Gehäuse - jeweils eine Busanschlusseinheit jedes der beiden Bustypen enthält, jedoch ohne Telegrammeinheit. Die Busanschlusseinheiten sind derart zusammengefasst, dass die Empfangsstufe jeder der beiden Busanschlusseinheiten mit der Sendestufe der anderen Busanschlusseinheit gekoppelt ist. Auf diese Weise wird aus standardisierten Busanschlusseinheiten der beiden Systeme ein Umsetzer zusammengesetzt, welcher es ermöglicht, die beiden Datenbusse, nämlich einen Zweidraht-Bus und einen Vierdraht-Bus, zusammenzuschalten, wobei jeder Bus in der Weise betrieben wird, dass seine Vorteile ausgenutzt werden. Der Vierdraht-Bus kann also mit einfachen und kostengünstigen Busankopplern ausgestattet werden, während der Zweidraht-Bus aufwendigere Busankoppler mit Gleichspannungsauskopplung erfordert. Ein Hersteller, der Busankoppler für jedes der beiden Bussysteme serienmäßig liefert, kann den erfindungsgemäßen Umsetzer aus Komponenten seines Herstellungsprogramms leicht zusammensetzen, ohne dass hierzu neue Schaltungen und Geräte erforderlich sind.

Ein weiterer Vorteil besteht darin, dass die Telegrammeinheiten der Busankoppler beider Systeme, die den informationstechnischen Teil bilden, generell von gleicher Bauart sein können. In beiden Systemen kann beispielsweise der gleiche Mikrocontroller verwendet werden, der auf das gemeinsame Busprotokoll abgestimmt ist.

Der erfindungsgemäße Umsetzer bewirkt eine bidirektionale Umsetzung zwischen einem Vierdraht-Bussystem und einem Zweidraht-Bussystem.

Sollte in einem der beiden zusammengefügten Systeme ein größerer Funktionsumfang realisiert sein als im anderen System, so wäre die Busanschlusseinheit des anderen Systems auf den größeren Funktionsumfang aufzurüsten.

Die Stromversorgung der Komponenten des Umsetzers kann entweder über das Zweidraht-Bussystem oder über das Vierdraht-Bussystem erfolgen. Eine Versorgung - über das Vierdraht-Bussystem hat den Vorteil, dass die Versorgungsspannung an den Leitungen bereits zur Verfügung steht und keiner Auskopplung bedarf.

Optional kann zwischen den beiden Busanschlusseinheiten im Umsetzer eine galvanische Trennstufe vorgesehen sein, um unerwünschte zusätzliche Kopplungen zu vermeiden und zu verhindern, dass Störsignale über den Umsetzer übertragen werden. Eine solche galvanische Kopplung erfolgt vorzugsweise über Optokoppler oder induktive Übertrager.

Im Folgenden wird unter Bezugnahme auf die Zeichnungen ein Ausführungsbeispiel der Erfindung näher erläutert. Diese Beschreibung ist nicht so zu verstehen, dass sie den Schutzbereich der Erfindung beschränkt. Dieser wird vielmehr durch die Ansprüche bestimmt.

Es zeigen:
- Fig. 1: ein kombiniertes Bussystem aus einem Zweidraht-Bussystem und einem Vierdraht-Bussystem, die durch einen Umsetzer miteinander gekoppelt sind,
- Fig. 2: ein Blockschaltbild eines Busankopplers des Zweidraht-Bussystems, und
- Fig. 3: ein Blockschaltbild des Umsetzers.

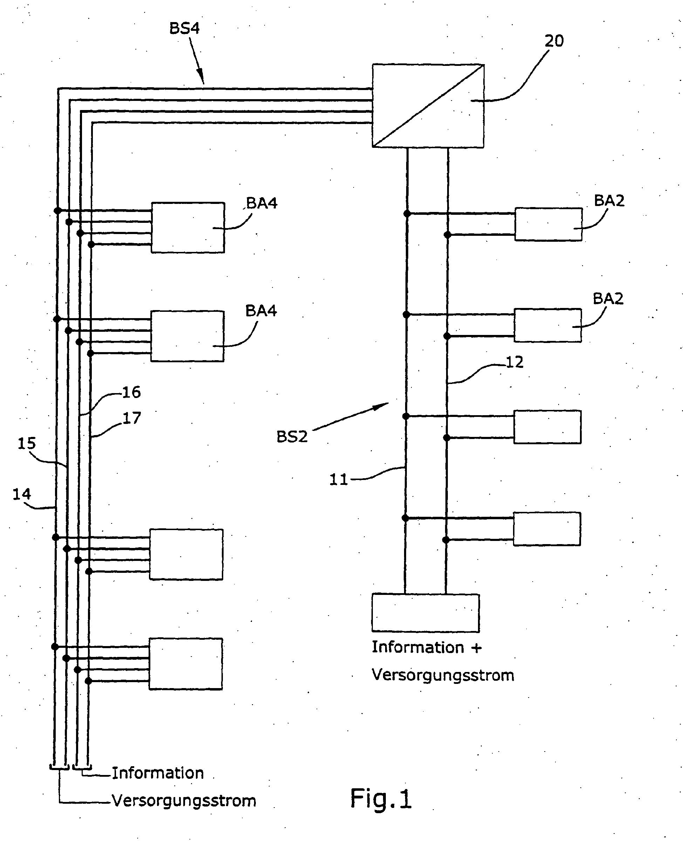

In Figur 1 ist ein Zweidraht-Bussystem BS2 dargestellt, das aus den beiden Drähten 11,12 besteht, welche an eine Stromversorgung angeschlossen sind. Mit den Drähten 11,12 sind Busankoppler BA2 verbunden, die ebenfalls zweidrähtig ausgeführt sind. Ein Busankoppler BA2 dient dazu, ein externes Gerät (nicht dargestellt) an den Datenbus anzuschließen, so dass dieses Gerät Daten oder andere Signale von dem Bus empfängt und/oder an den Bus liefert. Die Stromversorgung dient zur Versorgung sämtlicher Busankoppler BA2 des Zweidraht-Bussystems über die Drähte 11,12. Dem Versorgungsstrom werden die Impulse der Datentelegramme überlagert. Die Busankoppler BA2 können Datentelegramme untereinander austauschen. Eine Zentrale ist bei diesem Ausführungsbeispiel nicht vorhanden. Das Vierdraht-Bussystem BS4 weist vier Drähte 14,15,16,17 auf, von denen die Drähte 14 und 15 den Versorgungsstrom leiten, während die Drähte 16,17 die Information übertragen. An den Datenbus BS4 sind ebenfalls vieradrig Busankoppler BA4 angeschlossen. Die Busankoppler BA2 und BA4 sind Bestandteil der Businstallation. An die Busankoppler können jeweils externe Geräte angeschlossen werden.

Die beiden Bussysteme BS2 und BS4 sind durch einen Umsetzer 20 miteinander verbunden, der noch im Einzelnen erläutert wird. Auf diese Weise kann ein Busankoppler BA2 direkt mit einem Busankoppler BA4 kommunizieren.

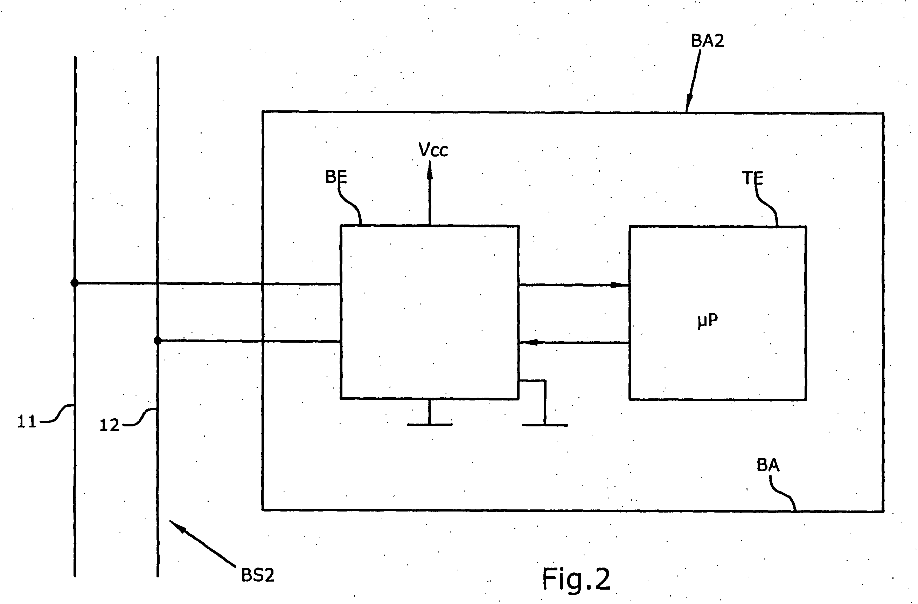

Figur 2 zeigt den Aufbau eines Busankopplers BA2 des Zweidraht-Bussystems. Der Busankoppler BA2 enthält eine Telegrammeinheit TE und eine Busanschlusseinheit BE. Die Telegrammeinheit TE enthält einen Mikroprozessor. Sie ist imstande, aufgrund von extern zugeführten Signalen Datentelegramme entsprechend dem standardisierten Busprotokoll zu erzeugen und solche Datentelegramme, die empfangen wurden, auszuwerten. Die Telegrammeinheit TE bildet den informationstechnischen Teil des Busankopplers BA. Die Busanschlusseinheit BE dient der physischen Ankopplung an die Drähte 11,12 und der Aufbereitung der Impulse. Die Telegrammeinheit TE und die Busanschlusseinheit BE sind durch eine Datenempfangsleitung und eine Datensendeleitung miteinander verbunden.

Ein Busankoppler BA4 des Vierdraht-Bussystems ist nicht eigens dargestellt.

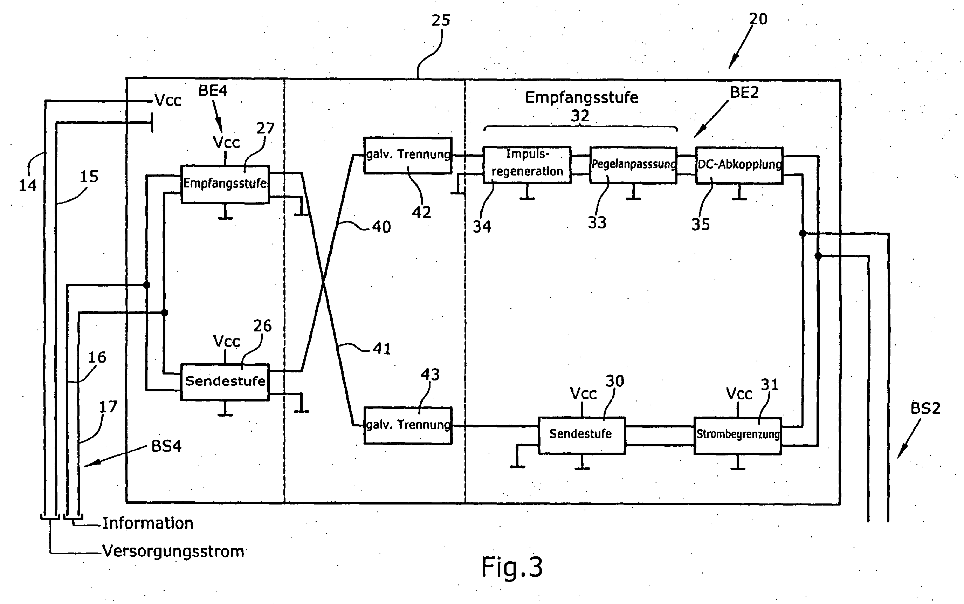

Figur 3 zeigt den Umsetzer 20. Dieser enthält in einem gemeinsamen Gerät 25 eine Busanschlusseinheit BE4 des Vierdraht-Bussystems und eine Busanschlusseinheit BE2 des Zweidraht-Bussystems.

Bei dem dargestellten Ausführungsbeispiel erfolgt die Stromversorgung des Umsetzers 20 über die Stromversorgungsdrähte 14,15 des Bussystems BS4.

Die Drähte 16,17 des Vierdraht-Bussystems sind mit dem Ausgang einer Sendestufe 26 und dem Eingang einer Empfangsstufe 27 der Busanschlusseinheit BE4 verbunden. Der Eingang der Empfangsstufe und der Ausgang der Sendestufe sind jeweils symmetrisch.

Die Busanschlusseinheit BE2 enthält eine Sendestufe 30, deren Eingang mit dem Ausgang der Empfangsstufe 27 gekoppelt ist. Der Ausgang der Sendestufe 30 ist über eine Strombegrenzungsschaltung 31 mit dem Datenbus BS2 verbunden.

Die Busanschlusseinheit BE2 enthält ferner eine Empfangsstufe 32 aus einer Pegelanpassungsstufe 33 und einer Impulsregenerationsstufe 34. Zwischen die Empfangsstufe 32 und den Datenbus BS2 ist eine DC-Abkopplung 35 geschaltet, welche die Stromversorgung des Datenbusses von der Empfangsstufe 32 fernhält.

Über eine Leitung 40 ist die Empfangsstufe 32 der Busanschlusseinheit BE2 mit der Sendestufe 26 der Busanschlusseinheit BE4 gekoppelt. Über eine Leitung 41 ist der Ausgang der Empfangsstufe 27 der Busanschlusseinheit BE4 mit dem Eingang der Sendestufe 30 der Busanschlusseinheit BE2 gekoppelt. In jeder der Leitungen 40,41 ist eine galvanische Trennstufe 42 bzw. 43 zur Potentialtrennung vorgesehen. Diese Trennstufe besteht aus einem Optokoppler oder einem induktiven Übertrager.

Bustelegramme, die auf dem Vierdraht-Bussystem BS4 übertragen werden, werden durch den Umsetzer 20 über die Empfangsstufe 27 und die Sendestufe 30 auf das Bussystem BS2 übertragen. Informationen, die auf dem Bussystem BS2 erzeugt werden, werden über die Empfangsstufe 32 und die Sendestufe 26 von dem Umsetzer 20 auf das Bussystem BS4 übertragen.

## Patentansprüche

1. Umsetzer für Installations-Bussysteme zur Ermöglichung einer Kommunikation zwischen einem Zweidraht-Bussystem (BS2), bei dem Versorgungsstrom und Information auf demselben Aderpaar übertragen werden, und einem Vierdraht-Bussystem (BS4), bei welchem Informationen und Versorgungsstrom über getrennte Aderpaare (16,17;14,15) geführt sind, wobei das Zweidraht-Bussystem und das Vierdrahtbussystem im gleichen Busprotokoll betrieben sind und wobei jedes Bussystem Busankoppler (BA2,BA4) aufweist, die jeweils eine Telegrammeinheit (TE) zur Erzeugung von Bustelegrammen aus externen Signalen, oder umgekehrt, und eine Busanschlusseinheit (BE) mit Sendestufe und Empfangsstufe für Bustelegramme enthalten,
**dadurch gekennzeichnet,**
**dass** Busanschlusseinheiten (BE2,BE4) der beiden Bussysteme ohne jeweilige Telegrammeinheiten (TE) in einem Gerät (25) derart zusammengefasst sind, dass die Empfangsstufen (27,32) jeder der beiden Busanschlusseinheiten (BE2,BE4) mit der Sendestufe (26,30) der anderen Busanschlusseinheit gekoppelt ist, und dass die in dem Gerät (25) enthaltene Busanschlusseinheit (BE2) des Zweidraht-Bussystems eine DC-Abkopplung (35) enthält.

2. Umsetzer nach Anspruch 1, **dadurch gekennzeichnet, dass** die Kopplung zwischen Empfangsstufe und Sendestufe über eine galvanische Trennstufe (42,43) erfolgt.

3. Umsetzer nach Anspruch 2, **dadurch gekennzeichnet, dass** die Trennstufe einen Optokoppler oder induktiven Übertrager aufweist.

4. Umsetzer nach einem der Ansprüche 1 - 3, **dadurch gekennzeichnet, dass** die Stromversorgung des Gerätes (25) über den Versorgungsteil des Vierdraht-Bussystems (BS4) erfolgt.

5. Umsetzer nach einem der Ansprüche 1 - 4, **dadurch gekennzeichnet, dass** die Stromversorgung des Gerätes (25) über das Zweidraht-Bussystem (BS2) erfolgt.

## Claims

1. A converter for installation bus systems adapted to allow communication between a two-wire bus system (BS2), wherein a supply current and information are transmitted on the same pair of wires, and a four-wire bus system (BS4), wherein information and supply current are conducted on separate wire pairs (16, 17; 14, 15), wherein the two-wire bus system and the four-wire bus system are operated under the same bus protocol and each bus system has bus couplers (BA2, BA4) each including a telegram unit (TE) for generating bus telegrams from external signals, or vice versa, and a bus connector unit (BE) comprising a transmitter stage and a receiver stage for bus telegrams,
**characterized in**
**that** bus connector units (BE2, BE4) of both bus systems are comprised in one apparatus (25) without their respective telegram units (TE) such that the receiver stage (27, 32) of each of both bus connector units (BE2, BE4) is coupled with the transmitter stage (26, 30) of the other bus connector unit, and that the bus connector unit (BE2) of the two-wire bus system included in the apparatus (25) comprises a DC decoupling (35).

2. The converter of claim 1, **characterized in that** the receiver stage and the transmitter stage are coupled through a galvanic buffer stage (42, 43).

3. The converter of claim 2, **characterized in that** the buffer stage comprises an optocoupler or an inductive transmitter.

4. The converter of one of claims 1-3, **characterized in that** the current supply of the apparatus (25) is effected through the supply portion of the four-wire bus system (BS4).

5. The converter of one of claims 1-4, **characterized in that** the current supply of the apparatus (25) is effected through the two-wire bus system (BS2).

## Revendications

1. Convertisseur pour des systèmes de bus d'installation pour permettre une communication entre un système de bus à deux fils (BS2), dans lequel le courant d'alimentation et l'information sont transmis sur la même paire de conducteurs et un système de bus à quatre fils (BS4), dans lequel des informations et le courant d'alimentation sont conduits par l'intermédiaire de paires de conducteurs séparées (16, 17 ; 14, 15), le système de bus à deux fils et le système de bus à quatre fils étant exploités selon le même protocole de bus et chaque système de bus comportant des coupleurs de bus (BA2, BA4) comprenant chacun une unité de télégrammes (TE) pour créer des télégrammes de bus à partir de signaux externes ou inversement et une unité de branchement de bus (BE), avec des étages émetteurs et des étages récepteurs pour des télégrammes de bus,
**caractérisé en ce que** des unités de branchement de bus (BE2, BE4) des deux systèmes de bus sont rassemblées sans unité de télégramme respectives (TE) dans un appareil (25) de façon telle, que les étages récepteurs (27, 32) de chacune des deux unités de branchement de bus (BE2, BE4) soient accouplés avec l'étage émetteur (26, 30) de l'autre unité de branchement de bus et **en ce que** l'unité de branchement de bus (BE2) du système de bus à deux fils, contenue dans l'appareil (25), comprend un désaccouplement DC (35).

2. Convertisseur selon la revendication 1, **caractérisé en ce que** l'accouplement entre l'étage récepteur et l'étage émetteur est assuré par un étage de séparation galvanique (42, 43).

3. Convertisseur selon la revendication 2, **caractérisé en ce que** l'étage de séparation comporte un optocoupleur ou un transmetteur inductif.

4. Convertisseur selon l'une quelconque des revendications 1 à 3, **caractérisé en ce que** l'alimentation en courant électrique de l'appareil (25) est assurée via le bloc d'alimentation du système de bus à quatre fils (BS4)

5. Convertisseur selon l'une quelconque des revendications 1 à 4, **caractérisé en ce que** l'alimentation en courant électrique de l'appareil (25) est assurée via le bloc d'alimentation du système de bus à deux fils (BS2).
